# EUROPÄISCHE PATENTSCHRIFT

(11) **EP 0 651 199 B1**
(45) Veröffentlichungstag und Bekanntmachung des Hinweises auf die Patenterteilung: **04.12.1996**
(21) Anmeldenummer: 94114993.2
(22) Anmeldetag: 23.09.1994
(51) Int. Cl.: F16M 5/00

(54) **Gestell zur Aufnahme von Maschinen und Geräten**
Frame for mounting of machines or apparatus
Bâti pour le montage de machines ou d'appareils

(30) Priorität: 29.09.1993 DE 4333048
(43) Veröffentlichungstag der Anmeldung: 03.05.1995
(73) Patentinhaber: ABB PATENT GmbH, D-68309 Mannheim (DE)
(72) Erfinder: Simonis, Gerhard, D-28757 Bremen (DE)
(74) Vertreter: Rupprecht, Klaus, Dipl.-Ing.

(56) Entgegenhaltungen:
- DE-A- 2 902 307
- DE-C- 849 499
- DE-U- 8 311 309
- DE-U- 8 622 738
- DE-U- 9 212 546

## Beschreibung

Die Erfindung betrifft ein Gestell zur Aufnahme von Maschinen und Geräten, das aus horizontal und vertikal verlaufenden Trägern besteht und auf mehreren Ebenen Verbindungsknoten aufweist, mit denen die als Hohlprofil ausgebildeten Träger eine formschlüssige Verbindung eingehen, wobei die Verbindungsknoten topfförmig ausgebildet sind, und in den Verbindungsknoten Zylinderstifte eingelassen sind, die ein vorgebbares Maß von einer dem Träger zugewandten Seite des Verbindungsknotens auskragen und in entsprechende Aussparungen des Trägers eingreifen.

Ein derartiges Gestell ist aus der DE-U-8 622 738 bekannt. Dort weisen zur Herstellung der Verbindung die Seitenflächen des topfförmigen Verbindungsknotens einen Zapfen auf, der in eine passende Stirnhöhlung des jeweiligen Trägers ragt. Der Träger ist über eine zentrale Bohrung mit dem Knotenkörper verschraubt. Nachteilig ist, daß jedes Trägerende mit einer Gewindeböhrung versehen werden muß.

Ein weiteres Gestell ist aus der DE 92 12 546 U1 bekannt. Dort weisen zur Herstellung der formschlüssigen Verbindung die Seitenflächen des würfelförmigen Verbindungsknotens dem Querschnitt der Innenumfangsfläche des Trägers angepaßte Erhebungen auf. Jede Seitenfläche des Verbindungsknotens ist ferner mit als Mehrkant oder als T-Nut ausgebildeten Durchbrüchen zur Aufnahme einer Verbindungslasche versehen, die relativ zum Verbindungs-knoten mit einem Querstift festgelegt ist. Die Verbindungslasche ragt mit ihrem freien Ende in den Innenraum des Trägers und ist mit einer die Verbindungslasche und die Trägerwandung durchsetzenden Spannschraube festgelegt.

Der Spannschraube sind mehrteilige Klemmelemente zugeordnet, die durch radiale Verschiebung eine Festlegung des Trägers relativ zum Verbindungsknoten bewirken sollen. Trotz dem hohen Fertigungsaufwand des Verbindungsknotens und dem komplizierten Aufbau der mit der Spannschraube gekoppelten Klemmelemente, ist eine Lösung der Klemmverbindung bei Erschütterungen des Gestells nicht auszuschließen.

Bei einem aus der DE 88 11 309 U1 bekannten Bauteil für Rahmen und/oder Tragkonstruktionen greift in Aussparungen eines würfelförmigen Knotenkörpers ein Verbindungsprofilstück ein, das mit seinem dem Knotenkörper abgewandten Ende in einen als Hohlprofil ausgebildeten Träger eingreift. Das Verbindungsprofilstück ist über eine zentrale Bohrung mit dem Knotenkörper verschraubt, während zwischen dem Verbindungsprofilstück und dem Träger eine quer zur Achse gerichtete Verbindungsschraube vorgesehen ist. Dieser Verbindungsart fehlt eine zwischen dem Knotenkörper und dem Träger wirkende Verspannung, so daß eine instabile Verbindung nicht auszuschließen ist.

Ferner ist aus der DE-PS 849 499 ein Maschinengestell bekannt, zwischen dessen Ständerteilen hohle Abstandshalter aus Blech angeordnet sind. Die Abstandshalter und die Ständer sind von Zugankern durchsetzt. Dort ist weder ein Verbindungsknoten, noch eine formschlüssige Verbindung vorgesehen.

Es stellt sich die Aufgabe, ein Gestell der gattungsgemäßen Art anzugeben, das mit einem einfach aufgebauten Verbindungsknoten auskommt und trotzdem eine zuverlässige stabile Verbindung sicherstellt.

Gelöst wird diese Aufgabe erfindungsgemäß dadurch, daß die Verbindungsknoten topfförmig ausgebildet sind, daß in den Verbindungsknoten Zylinderstifte eingelassen sind, die ein vorgebbares Maß von einer dem Träger zugewandten Seite des Verbindungsknotens auskragen und in entsprechende Aussparungen des Trägers eingreifen, daß eine an ihren Enden mit einem Gewinde versehene Zugstange den Träger durchsetzt, und daß eine Schraubverbindung zwischen Zugstange und Verbindungsknoten besteht, wobei zwischen einer Stirnseite der Zugstange und dem Verbindungsknoten ein Spalt vorgesehen ist.

Der beispielsweise als Gußteil hergestellte topfförmige Verbindungsknoten ist nach einer planflächigen Außenbearbeitung lediglich mit einer den Seiten- und Bodenflächen zugeordneten zentralen Bohrung für die Zugstange und mit diesen Flächen und der dem Boden abgewandten Fläche zugeordneten Bohrungen für die Zylinderstifte zur Erzielung der formschlüssigen Verbindung zu versehen. In den Träger sind lediglich Aussparungen für die Zylinderstifte einzubringen. Der Zweck der Aussparungen kann auch von der Innenumfangsfläche des Trägers übernommen werden, die dann zur Sicherstellung der formschlüssigen Verbindung von der Mantelfläche eines Zylinderstiftes linienförmig kontaktet wird. Die topfförmige Ausbildung des Verbindungs-knotens gewährleistet einen problenlosen Zugang beim Verschrauben des Verbindungsknotens mit den Zugstangen, wobei der Spalt zwischen Zugstange und Verbindungsknoten eine Verspannung zwischen dem Träger und dem Verbindungsknoten sicherstellt. Das erfindungsgemäße Gestell bringt eine ausgezeichnete Versteifung und eine gegen selbständiges Lösen nicht anfällige Verbindung sowie wegen seines Aufbaues eine zeitsparende Montage.

Gemäß einer bevorzugten Ausgestaltung ist vorgesehen, daß zwischen dem Verbindungsknoten und dem ihm zugewandten Träger eine mit einer zentralen Durchgangsbohrung versehene und von den Zylinderstiften durchsetzte Distanzplatte angeordnet ist, daß die Zugstange bis in die Durchgangsbohrung der Distanzplatte ragt und daß die Distanzplatte mit Mitteln zur Befestigung von Aggregaten, Geräten oder Bauteilen des Gestells ausgestattet ist.

Durch die Distanzplatten ist eine Anpassung an unterschied-lichste Aggregate möglich. Eine eingelegte und an den Distanzplatten einer Gestellebene befestigten Stahlplatte kann z. B. zur Befestigung von Zylindern, Preßstempeln oder Schraubaggregaten dienen. Schutzverkleidung oder Bedienpulte können ebenfalls an den Distanzplatten angeschraubt werden. Außer der Sicherstellung des Formschlusses und der Tragfunktion für Maschinen und Geräte dient die Distanzplatte noch als Widerlager beim Verspannen der als Hohlprofil ausgbildeten Träger.

Soll das Gestell mehr als eine horizontale Ebene aufweisen, ist die den Boden des topfförmigen Verbindungsknotens durchsetzende Schraube ein Stehbolzen, der mit seinem dem Boden abgewandten Ende mit einer einen vertikalen Träger durchsetzenden Zugstange verbunden ist.

Damit findet die dort anschließende Zugstange für den vertikalen Träger einen Festpunkt, so daß über die den Boden des Verbindungsknotens der nächsten Ebene durchsetzende Schraube eine Einspannung der Distanzplatten zwischen dem Träger und dem Verbindungsknoten erfolgen kann.

Wegen der erhöhten Steifigkeit wird als Werkstoff für das Gestell vorzugsweise Stahl verwendet.

Anhand eines Ausführungsbeispieles und der schematischen Fig. 1 bis 3 wird das erfindungsgemäße Gestell beschrieben.

Dabei zeigt die
- Fig. 1: eine teilweise im Schnitt dargestellte Seitenansicht eines Gestells,
- Fig. 2: eine Ansicht in Pfeilrichtung II der Figur 1,
- Fig. 3: einen Teilschnitt im Bereich eines Verbindungs-knotens in einem größeren Maßstab und
- Fig. 4: einen Teilbereich einer anderen Gestellausbildung.

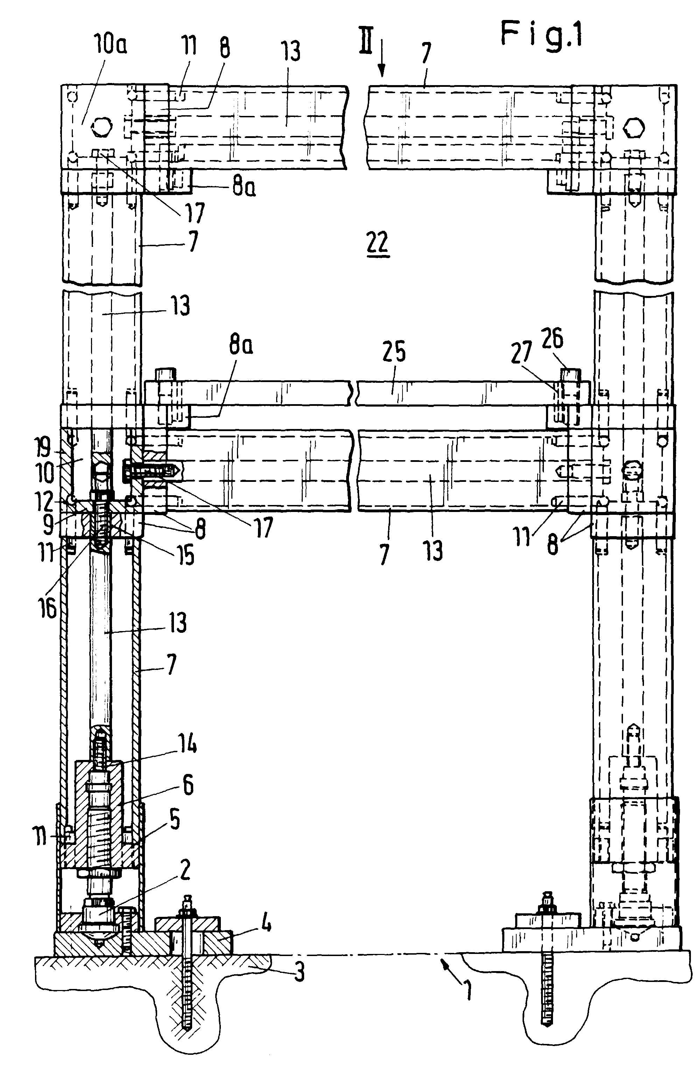

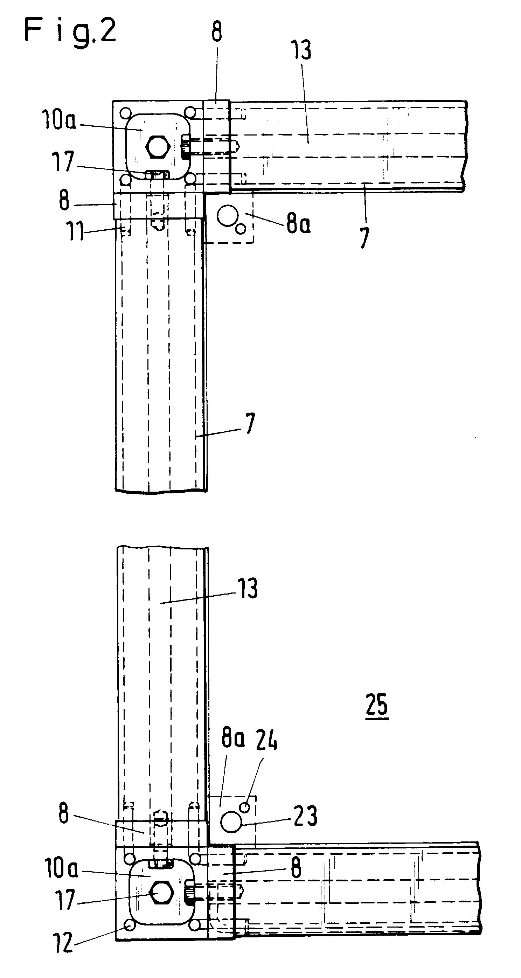

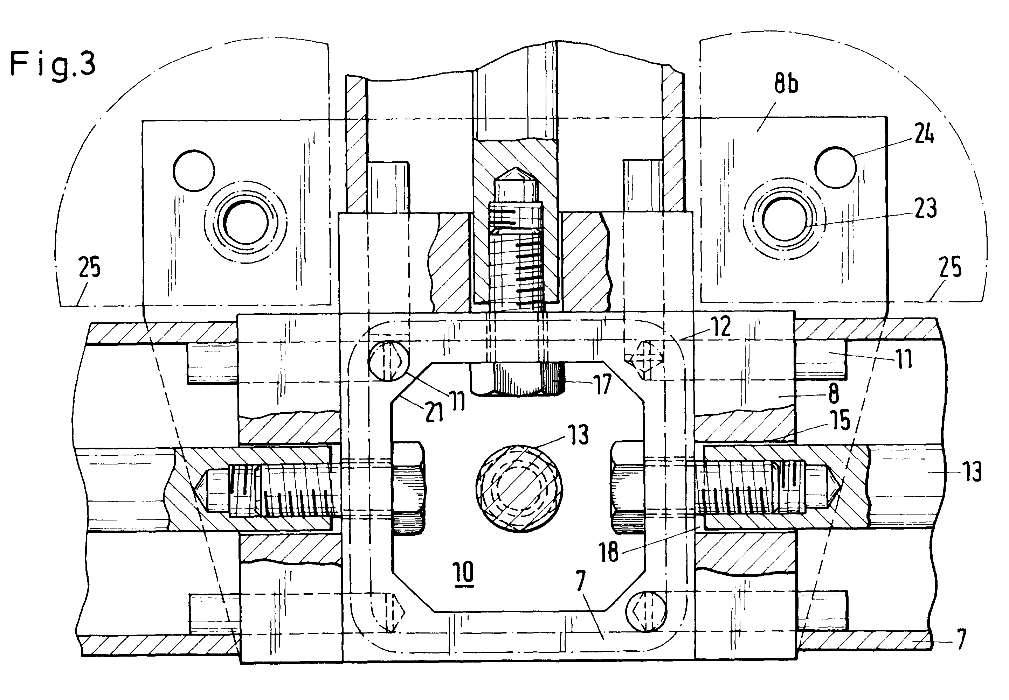

Die Fig. 1 und 2 zeigen den Teilbereich eines Gestells 1, das über einen Fuß 2 auf einer am Boden 3 lösbar verankerten Platte 4 abgestützt ist. Auf einer Schulter 5 einer der Einstellung des Fußes dienenden Gewindemuffe 6 ist ein als Vierkantrohr ausgebildeter vertikal erstreckter Träger 7 abgestützt. In die Verbindungsmuffe 6 eingelassene Zylinderstifte 11 kontakten die Innenumfangsfläche des Trägers 7. Die Zylinderstifte können auch in Aussparungen eingreifen, die in den Träger 7 eingebracht sind. Außer dem Vierkantrohr sind auch andere Hohlprofile als Träger geeignet. Mit seinem der Gewindemuffe 6 abgewandten Ende grenzt der Träger 7 an eine Distanzplatte 8, die zwischen ihm und einem Boden 9 eines topfförmig ausgebildeten Verbindungsknotens 10 angeordnet ist. Die Distanzplatte 8 ist von vier Zentrierstiften 11 durchsetzt, die ein vorgebbares Maß über beide Stirnflächen der Distanzplatte vorstehen. Mit ihren überstehenden Bereichen greifen die Zentrierstifte in Bohrungen 12 des Verbindungsknotens ein und kontakten die Innenumfangsfläche des Trägers 7, so daß eine formschlüssige Verbindung gegenüber dem als Vierkantrohr ausgebildeten Träger 7 und gegenüber dem Verbindungsknoten 10 entsteht. Das Vierkantrohr ist dann vorzugsweise in seinen Eckbereichen abgerundet ausgebildet. In ihrer Position gesichert wird diese formschlüssige Verbindung durch eine den Träger 7 durchsetzende Zugstange 13, die beidendig mit einem Innengewinde versehen ist. Über das Innengewinde des unteren Endes ist die Zugstange 13 mit einem Gewindebolzen 14 des Fußes 2 verbunden. Das obere Ende der Zugstange ragt in eine Durchgangsbohrung 15 der Distanzplatte 8 und wird von einem durch den Boden 9 des Verbindungsknotens 10 erstreckten Stehbolzen 16 unter Anlage an dessen Seckskantbundfläche an der Innenseite des Bodens 9 verspannt. Wie in Verbindung mit der Fig. 3, die einen Verbindungs-knoten 10 und drei horizontal wegführende Träger 7 in einem größeren Maßstab zeigt, deutlich zu erkennen ist, dient bei den seitlich wegführenden Trägern eine Schraube 17 zur Verspannung der Zugstange 13. Aus der Fig. 3 ist auch ein Spalt 18 zwischen der Außenwand des Verbindungsknotens und der Stirnseite der Zugstange ersichtlich, der zur Erzielung eines kraftschlüssigen Kontaktes zwischen der Distanzplatte und dem Verbindungsknoten bzw. dem Träger zwingend erforderlich ist. Die formschlüssige Verbindung wird bei den horizontal wegführenden Trägern 7 mit einer Distanzplatte 8 in gleicher Weise erzielt, wie bei den vertikal von dem Verbindungsknoten wegführenden Träger.

Der in Fig. 1 aufrechtstehende topfförmige Verbindungsknoten 10 weist von seinem Boden 9 wegführende Seitenwände 19 auf, deren Stirnseiten an der Distanzplatte 8 abgestützt sind. Aus den Fig. 2 und 3 ist die dem Vierkantrohr angepaßte Außenkontur eines Verbindungsknotens erkennbar. Dort ist auch ersichtlich, daß der Verbindungsknoten in seinen Eckbereichen durch eine Abrundung 20 (Fig. 2) bzw. eine Abschrägung 21 (Fig. 3) verstärkt ist. Die Distanzplatte 8a ist ebenso wie die Distanzplatte 8 von Zylinderstiften 11 durchsetzt, die in Bohrungen 12 des Verbindungsknotens 10 eingreifen und die Innenumfangsfläche des Vierkantrohres, wie in Fig. 3 angedeutet, kontakten, so daß die besagte formschlüssige Verbindung hergestellt ist.

Gemäß Fig. 1 ist die von dem Verbindungsknoten 10 der ersten Ebene zum Verbindungsknoten 10a der zweiten Ebene erstreckte Zugstange 13 auf den nach oben ragenden Gewindeteil des Stehbolzens 16 bis zur Anlage an eine dem Boden 9 des Verbindungknotens 10 abgewandte Sechskantstirnfläche des Stehbolzens 16 geschraubt. Die Zugstange 13 durchsetzt die Durchgangsbohrung 15 der Distanzplatte 8a sowie den Träger 7 und ragt in die Durchgangsbohrung 15 einer der zweiten Ebene zugeordneten Distanzplatte 8a, wobei zwischen dem Boden 9 des Verbindungsknotens 10a und der Stirnfläche der Zugstange 13 der in Fig. 3 gezeigte Spalt 18 verbleibt. In dem gezeigten Ausführungsbeispiel bildet die zweite Ebene gleichzeitig die oberste Ebene, so daß am Boden 9 des Verbindungsknotens 10a eine Schraube 17 zur Verspannung der Zugstange 13 eingesetzt ist. Soll eine dritte Gestellebene erforderlich sein, ist die Schraube 17 durch einen Stehbolzen 16 zu ersetzen. Die horizontal wegführenden Träger 7 der zweiten oder einer möglichen weiteren Gestellebene sind in gleicher Weise wie die Träger der ersten Ebene, und wie zu Fig. 3 erläutert, gegenüber dem Verbindungsknoten festgelegt.

Die in den Gestellinnenraum 22 ragenden Bereiche der Distanzplatte 8a sind mit einer Gewindebohrung 23 und einer Aufnahmebohrung 24 versehen, die zur Arretierung einer Platte 25 mit Hilfe einer Zylinderkopfschraube 26 und einer Stiftverbindung 27 dienen. Auf der Platte 25 können nicht dargestellte Maschinen und Geräte installiert werden. Derartige Maschinen und Geräte sowie weitere Gestellbauteile können bei Weglassen der Platte 25 auch unmittelbar an den Distanzplatten befestigt werden.

In der Fig. 3 ist eine Distanzplatte 8b dargestellt, die mit zwei Bereichen ausgestattet ist, die in verschiedene Gestellzonen ragen und dabei zur Arretierung von zwei verschiedenen Platten 25 dienen. Wie aus der teilweise in unterbrochenen Linien gezeichneten Kontur der Distanzplatte 8b hervorgeht, ist diese Distanzplatte unterhalb des seitlich wegführenden Trägers 7 angordnet. Die Figur 3 läßt erkennen, daß die form- und kraftschlüssig wirkende Knotenverbindung vielseitig einsetzbar ist. Mit den drei horizontal wegführenden Trägern wird angedeutet, daß Gestellvarianten mit bis zu sechs von einem Verbindungsknoten ausgehenden Trägern möglich sind.

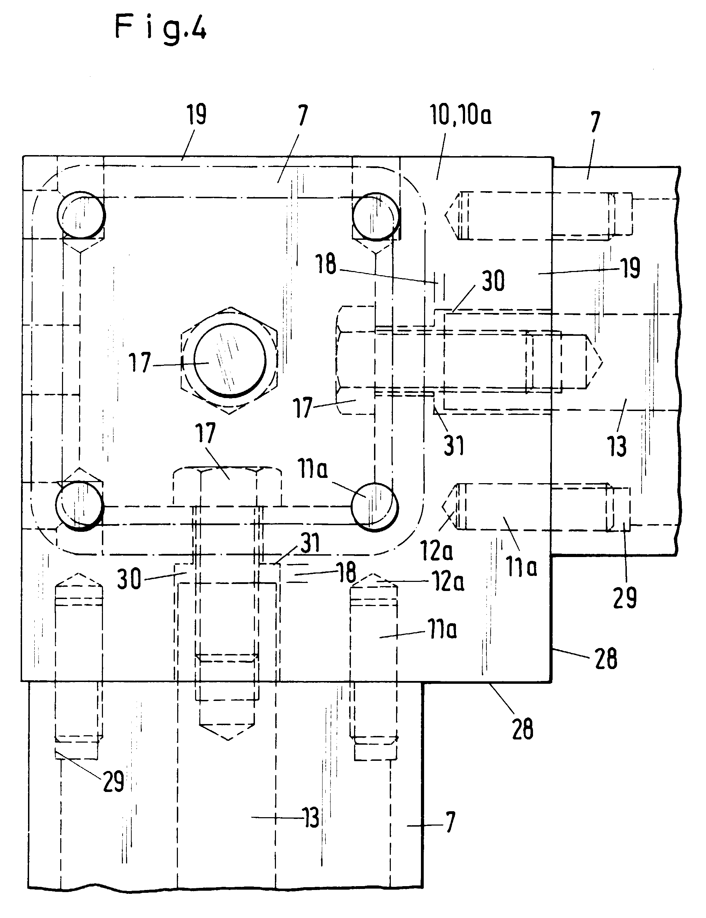

Gemäß der Gestellausbildung nach Fig. 4 grenzen die Träger 7 unmittelbar, also ohne Zwischenschaltung einer Distanzplatte, an den Verbindungsknoten 10, 10a. Zur Erzielung der formschlüssigen Verbindung sind in Bohrungen 12a des Verbindungsknotens 10, 10a Zylinderstifte 11a arretiert. Die Seitenwände des topfförmigen Verbindungsknotens 10, 10a können bei diesem Ausführungsbeispiel unterschiedlich dick ausgebildet sein, wobei die dickeren Seitenwände die Zentrierstifte 11a aufnehmen. Diese Zylinderstifte greifen mit ihren eine Seitenfläche 28 überragenden Teilen unter Formschluß in Aussparungen 29 des Trägers 7 ein, die vorzugsweise in den Eckbereichen des als Hohlprofil ausgebildeten Trägers eingebracht sind. Die den Träger 7 durchsetzende Zugstange 13 ragt in eine Stufenbohrung 30 des Verbindungsknotens und wird mit der Schraube 17 bis zur Anlage des Trägers 7 an die Seitenfläche 28 verspannt. Ein verbleibender Spalt 18 zwischen einer Schulter 31 der Stufenbohrung 30 und der Zugstange 13 garantiert einen stabilen Gestellverbund, resultierend aus der Kombination von Formschluß- und Kraftschlußverbindung.

Zur Erzielung einer ausreichenden Steifigkeit bestehen die Bauteile des Gestells vorzugsweise aus Stahl.

## Patentansprüche

1. Gestell zur Aufnahme von Maschinen und Geräten, das aus horizontal und vertikal verlaufenden Trägern (7) besteht und auf mehreren Ebenen Verbindungsknoten (10, 10a) aufweist, mit denen die als Hohlprofil ausgebildeten Träger eine formschlüssige verbindung eingehen, wobei die Verbindungsknoten (10, 10a) topfförmig ausgebildet sind, und in den Verbindungsknoten Zylinderstifte (11, 11a) eingelassen sind, die ein vorgebbares Maß von einer dem Träger (7) zugewandten Seite des Verbindungsknotens auskragen und in entsprechende Aussparungen des Trägers eingreifen, dadurch gekennzeichnet, daß an eine an ihrem Ende mit einem Gewinde versehene Zugstange (13) den Träger (7) durchsetzt und daß eine Schraubverbindung zwischen Zugstange und Verbindungsknoten besteht, wobei zwischen einer Stirnseite der Zugstange und den Verbindungsknoten ein Spalt (18) vorgesehen ist.

2. Gestell nach Anspruch 1, dadurch gekennzeichnet, daß zwischen den Verbindungsknoten (10, 10a) und dem ihnen zugewandten Träger (7) eine mit einer zentralen Durchgangsbohrung (15) versehene und von den Zentrierstiften (11, 11a) durchsetzte Distanzplatte (8, 8a, 8b) angeordnet ist, daß die Zugstange bis in die Durchgangsbohrung der Distanzplatte ragt, und daß die Distanzplatte mit Mitteln zur Befestigung von Aggregaten, Geräten oder Gestellbauteilen ausgestattet ist.

3. Gestell nach Anspruch 1 oder 2, dadurch gekennzeichnet, daß die den Boden (9) des Verbindungsknotens (10, 10a) durchsetzende Schraube ein Stehbolzen (16) ist, der mit seinem dem Boden abgewandten Ende mit einer den vertikalen Träger (7) durchsetzende Zugstange (13) verbunden ist.

## Claims

1. Frame for accommodating machines and apparatuses, which is composed of horizontally and vertically running supports (7) and has connecting nodes (10, 10a) on a number of levels, by means of which connecting nodes (10, 10a) the supports, which are designed as hollow sections, form a positively locking connection, the connecting nodes (10, 10a) being designed in the form of pots and cylindrical pins (11, 11a) being incorporated in the connecting nodes, which cylindrical pins (11, 11a) project to a predeterminable extent from a side of the connecting node facing the support (7) and engage in corresponding cutouts in the support, characterized in that onto [sic] a tie rod (13) which is provided with a thread at its end passes through the support (7) and in that a screw connection exists between the tie rod and the connecting nodes, a gap (18) being provided between one end of the tie rod and the connecting nodes.

2. Frame according to Claim 1, characterized in that a spacer plate (8, 8a, 8b) is arranged between the connecting nodes (10, 10a) and the support (7) facing them, is provided with a central through-hole (15) and has centring pins (11, lla) passing through it, in that the tie rod projects into the through-hole in the spacer plate, and in that the spacer plate is equipped with means for fixing equipment sets, apparatuses or frame structural parts.

3. Frame according to Claim 1 or 2, characterized in that the screw which passes through the base (9) of the connecting node (10, 10a) is a stud (16) which is connected at its end facing away from the base to a tie rod (13) which passes through the vertical support (7).

## Revendications

1. Bâti pour des machines et d'appareils, composé d'éléments porteurs (7) horizontaux et verticaux et présentant à plusieurs niveaux des noeuds d'assemblage (10, 10a) avec lesquels les éléments porteurs réalisés sous la forme d'un profilé creux se trouvent assemblés par complémentarité de forme, les noeuds d'assemblage (10, 10a) étant réalisés en forme de godet et des goupilles cylindriques (11, lla) étant enchâssées dans les noeuds d'assemblage de manière à dépasser d'une valeur prédéterminée sur un côté du noeud d'assemblage, tourné vers l'élément porteur, et à pénétrer dans des évidements correspondants de l'élément porteur, caractérisé par le fait qu'un tirant (13) muni d'un filetage à ses extrémités traverse l'élément porteur et qu'un assemblage à vis est établi entre le tirant et le noeud d'assemblage, une fente (18) étant prévue entre un côté frontal du tirant et le noeud d'assemblage.

2. Bâti suivant la revendication 1, caractérisé par le fait qu'une plaque d'espacement (8, 8a, 8b) munie d'un trou de passage central (15) et traversée par les goupilles cylindriques (11, 11a) est disposée entre le noeud d'assemblage (10, 10a) et les éléments porteurs (7) tournés vers eux, que le tirant s'étend jusque dans le trou de passage de la plaque d'espacement et que la plaque d'espacement est pourvue de moyens pour la fixation de machines, appareils ou parties de bâti.

3. Bâti suivant la revendication 1 ou 2, caractérisé par le fait que la vis traversant le fond (9) du noeud d'assemblage (10, 10a) est un goujon d'écartement (16) dont l'extrémité éloignée du fond est reliée à un tirant (13) traversant l'élément porteur (7) vertical.
